# FASCICULE DE BREVET EUROPEEN

(11) **EP 3 682 992 B1**
(45) Date de publication et mention de la délivrance du brevet: **18.08.2021**
(21) Numéro de dépôt: 20152517.7
(22) Date de dépôt: 17.01.2020
(51) Int. Cl.: B23B 41/08, F16L 41/06

(54) **DISPOSITIF DE PERÇAGE D'UNE CANALISATION**
VORRICHTUNG ZUM BOHREN EINER KANALISATION
DRILLING DEVICE FOR A PIPE

(30) Priorité: 21.01.2019 FR 1900509
(43) Date de publication de la demande: 22.07.2020
(73) Titulaire: Etablissements Saint Germain Et Straub, 80210 Feuquieres-en-Vimeu (FR)
(72) Inventeur: HELLE, Jacky, 80130 FRIVILLE ESCARBOTIN (FR)
(74) Mandataire: Bureau Duthoit Legros Associés

(56) Documents cités:
- FR-A1- 2 984 780
- US-A- 5 964 240

## Description

L'invention est relative à un dispositif de perçage convenant pour le perçage d'une canalisation en charge (ou non) telle que par exemple une canalisation transportant de l'eau, ainsi qu'un procédé de perçage d'une canalisation mettant en œuvre un tel dispositif de perçage.

### Domaine technique

Le domaine de l'invention est celui du transport de fluide, et plus particulièrement celui de l'adduction d'eau pour lequel il est connu de créer une dérivation à partir d'une conduite d'eau, par exemple pour la création de l'alimentation en eau de nouvelles habitations. Il existe ainsi des colliers de dérivation qui comprennent traditionnellement une selle équipée d'un robinet et d'une bride (souple ou rigide). Classiquement, ce type de collier est monté sur une conduite d'eau en charge (ou non), la bride souple étant déformée pour ceinturer la canalisation, la selle en appui sur une paroi extérieure de la canalisation.

Le domaine de l'invention est plus particulièrement celui des dispositifs de perçage utilisés pour percer la paroi de la canalisation au droit du robinet, et à travers la tubulure de ce dernier, une fois le collier de dérivation en place.

### Technique antérieure

Il est ainsi connu de l'état de la technique des dispositifs de perçage spécialement configurés pour cet usage, à savoir convenant pour le perçage d'une canalisation en charge, qui comprennent une partie de connexion configurée pour être fixée de manière amovible sur un robinet d'un collier de dérivation ainsi qu' un outil de coupe déplaçable par rapport à ladite partie de connexion, configuré pour traverser ledit robinet en assurant le perçage de la canalisation.

Selon un premier état de la technique bien connu de l'homme du métier un tel dispositif de perçage comprend une partie de connexion venant se fixer sur le robinet du collier, de manière rigide, ainsi qu'un arbre porte-outil, couplé à un outil de coupe, destiné à traverser le robinet pour attaquer la canalisation. De manière notable, et selon ce premier état de la technique, l'arbre porte-outil est lié mécaniquement à la partie de connexion par un système de vissage. Le document WO 99/32823 enseigne une telle technique de perçage. Le perçage de la canalisation est obtenu par la mise en rotation, de manière manuelle ou motorisée, de l'arbre porte-outil. Cette rotation entraîne la rotation conjointe de l'outil de coupe et son avancement d'un déplacement dépendant du pas de vis dudit système de vissage. Une telle technique de perçage est largement répandue pour percer des canalisations en charge. Toutefois et comme expliqué dans le document FR 2 984 780 de la présente Demanderesse, cette technique de perçage présente pour inconvénient non négligeable qu'elle impose des efforts importants sur le collier de dérivation auquel le dispositif de perçage est lié, ce qui oblige à sur-dimensionner le collier de dérivation et sa bride afin de résister aux contraintes mécaniques imposées par les opérations de perçage. Par ailleurs, la technique de perçage selon WO 99/32823 est génératrice de copeaux, qui, en raison de leur taille importante, sont susceptibles, de dégrader les équipements tels que les compteurs d'eau, lorsque ces déchets sont emportés dans la conduite, en aval par le fluide en circulation ou même les éléments d'obturation du robinet de prise en charge par exemple.

Le dispositif de perçage selon le document FR 2 984 780, qui divulgue un dispositif de perçage selon le préambule de la revendication 1, apporte un progrès notable pour répondre à ce problème en ce que sa structure permet de dissocierla rotation appliquée par l'arbre portant l'outil de coupe, qui est animé en rotation par des moyens moteurs , d'un part, de l'effort de poussée appliqué par l'outil de coupe qui est assuré uniquement par des moyens élastiques, et en particulier par un ressort à spires utilisé en compression, d'autre part. L'effort de perçage n'excède ainsi jamais celui imposé par les moyens élastiques : on s'assure que l'effort de perçage n'altère pas le collier de dérivation sur lequel le dispositif de perçage est assujetti.

Un tel dispositif de perçage selon FR 2.984.780 minimisant les efforts sur le collier lors des opérations présente de manière caractéristique :
- un corps solidaire rigidement d'une partie de connexion au robinet du collier de dérivation de la canalisation
- une première partie, mobile en coulissement par rapport audit corps selon une course limitée, grâce à des moyens de guidage entre ladite première partie et ledit corps, dirigés suivant une direction parallèle à l'arbre,
- une seconde partie, mobile en rotation par rapport à ladite première partie grâce à des moyens de guidage en rotation entre ladite seconde partie et ladite première partie, d'axe confondu à celui de l'arbre, ladite seconde partie comprenant un moyen de fixation amovible dudit arbre,
- des moyens élastiques configurés pour contraindre ladite première partie mobile par rapport au corps dans le sens de perçage,
- des moyens de mise en charge desdits moyens élastique.

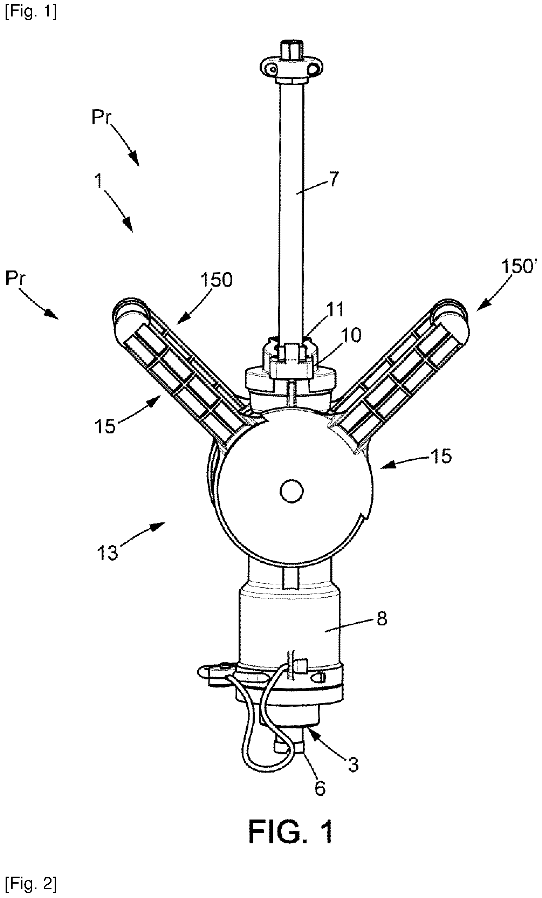

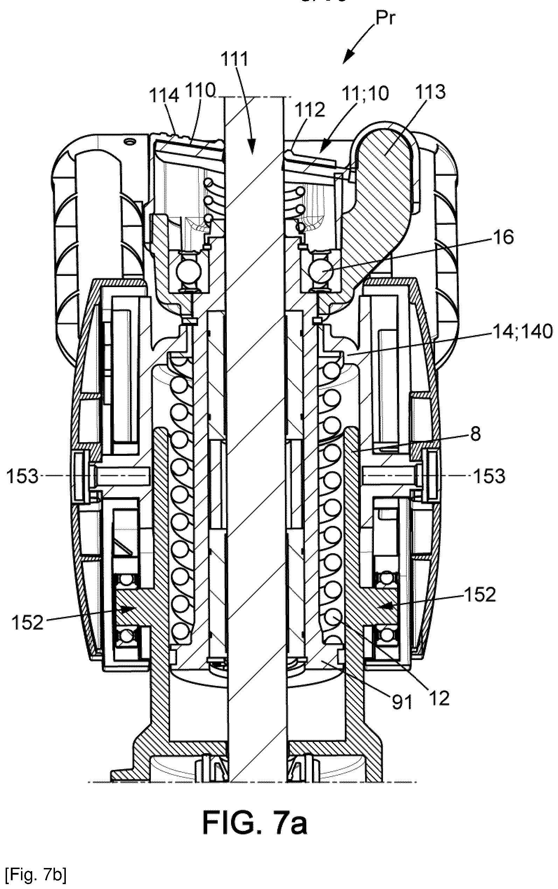

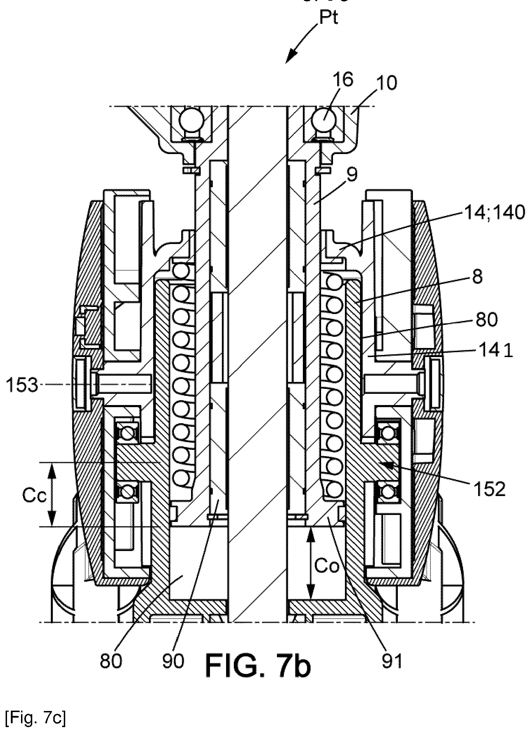

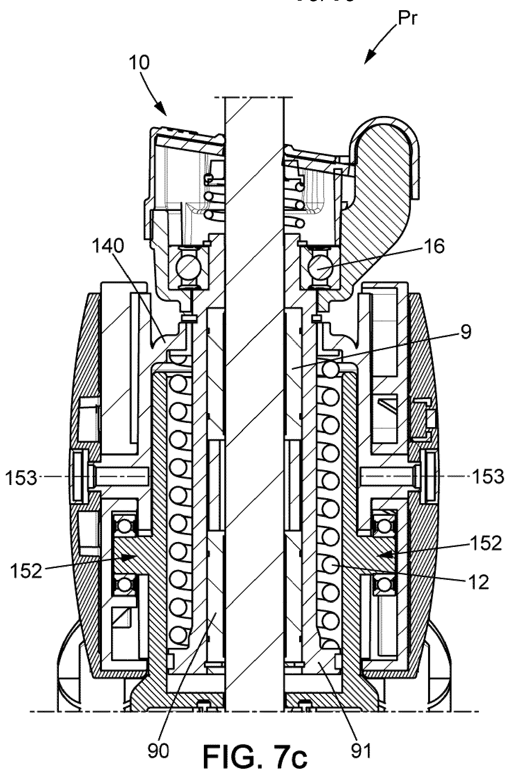

Les moyens de mise en charge, libérables, sont prévus entre le corps et la première partie. Selon un premier exemple illustré des figures 1 à 5, ces moyens comprennent des sauterelles de bridage assujettis sur la première partie, et venant en appui sur une bride du corps pour tirer la première partie en comprimant un ressort de compression. Selon un second exemple visible des figures 7 à 11, ces moyens comprennent deux leviers à came, articulés chacun en pivot par rapport au corps, et deux galets solidaires de la première partie configurés pour coopérer avec la came.

Dans les deux cas, la compression du ressort à spires et donc la mise en charge des moyens élastique s'opère en tirant la première partie par mise en œuvre d'un effort entre le corps et la première partie, et suivant le sens opposé au sens de perçage, grâce aux sauterelles de bridage, ou encore grâce aux systèmes de levier à came/galets. Ainsi la sauterelle de bridage (ou le couple leviers à came/galets) assure un blocage de la première partie par rapport au corps dans cette position de compression des moyens élastiques, et alors que l'arbre portant l'outil de coupe n'est toujours pas en place dans le robinet, ainsi que dans les composants du dispositif de perçage liés à ce robinet.

L'arbre et l'outil de coupe ne sont assujettis à la seconde partie via le moyen de fixation qu'après cette étape de compression, en mettant en butée l'outil de coupe contre la canalisation. Avant de procéder au perçage, il est encore obligatoire de libérer la sauterelle (ou le système de came) de sorte que la première partie puisse transmettre l'effort de poussée des moyens élastiques à l'outil en appui contre la canalisation, et puisse se déplacer lors de la mise en rotation de l'arbre et de l'outil de coupe lors du perçage.

Selon les constatations de l'inventeur, le procédé de perçage nécessite un certain nombre d'étapes qui ne peut être réduit, et en particulier successivement une étape de mise en charge des moyens élastiques, une étape de fixation de l'arbre et de l'outil de coupe, mais encore une étape de libération des moyens élastiques de sorte que ces derniers contraignent l'outil de coupe contre la canalisation. Selon les constatations de l'inventeur, ce nombre d'étapes avant perçage ralentit la mise en œuvre lors du perçage, et peut être à l'origine d'erreur pour l'opérateur.

Un autre défaut du dispositif de perçage selon cette antériorité est, selon les constatations de l'inventeur le risque de blessure :
- par armement à vide : les moyens de mise en charge du dispositif de perçage selon FR 2.984.780 peuvent être armés (à savoir le ressort compressé), alors que ce dernier n'est pas en place sur la canalisation, représentant un risque pour les opérateurs.
- par pincement : le système de sauterelle de bridage (ou encore le système de levier à cames et galets) peuvent être à l'origine de risque de blessure pour l'opérateur, en particulier par pincement.

### Problème technique

Le problème auquel répond l'invention est tout d'abord de proposer un dispositif de perçage dont la structure est configurée pour le perçage en charge d'une canalisation minimisant les efforts sur la canalisation, à l'instar de celui du document FR 2 984 780, mais dont la mise en œuvre est plus rapide et plus aisée que celui de cette antériorité.

Un autre but de la présente invention est de proposer un tel dispositif de perçage minimisant les risques de blessure, en interdisant un armement à vide des moyens élastiques du dispositif de perçage.

Un autre but de la présente invention est de proposer, au moins selon un mode de réalisation, un tel dispositif de perçage minimisant les risques de pincement lors de la mise en charge des moyens élastiques.

Il est ainsi proposé un dispositif de perçage convenant pour le perçage d'une canalisation en charge, comprenant une partie de connexion configurée pour être fixée de manière amovible sur un robinet d'un collier de dérivation, ainsi qu'un outil de coupe déplaçable par rapport à ladite partie de connexion, configuré pour traverser ledit robinet pour permettre le perçage de la canalisation, ledit dispositif comprenant :
- un arbre couplé à l'une de ses extrémités à l'outil de coupe ; l'autre extrémité de l'arbre étant destinée à être reliée à des moyens moteurs pour l'entraînement en rotation de l'outil de coupe,
- un corps rigidement solidaire de la partie de connexion,
- une première partie, mobile en coulissement par rapport audit corps selon une course limitée, grâce à des moyens de guidage entre ladite première partie et ledit corps, dirigés suivant une direction parallèle à l'arbre,
- une seconde partie, mobile en rotation par rapport à ladite première partie grâce à des moyens de guidage en rotation entre ladite seconde partie et ladite première partie, d'axe confondu à celui de l'arbre, ladite seconde partie comprenant un moyen de fixation amovible dudit arbre,
- des moyens élastiques configurés pour contraindre ladite première partie mobile par rapport au corps dans le sens de perçage,
- des moyens de mise en charge desdits moyens élastiques
ledit dispositif étant configuré de sorte à permettre un perçage pendant lequel l'effort de perçage et l'avance de l'outil de coupe sont assurés uniquement par les moyens élastiques.

De manière notable et selon l'invention, les moyens de mise en charge comprennent :
- une troisième partie, mobile en coulissement par rapport au corps et par rapport à la première partie, lesdits moyens élastiques étant prévus pour être compressés entre un appui formé sur la troisième partie, et un appui formé sur la première partie de sorte que lesdits moyens élastiques sont configurés pour être compressés par déplacement de la troisième partie par rapport au corps, tandis que la première partie reste fixe par rapport audit corps,
- un mécanisme de manœuvre entre le corps et la troisième partie configuré pour assurer le déplacement de la troisième partie sur le corps suivant le sens de perçage ledit mécanisme de manœuvre étant configuré pour prendre deux positions, y compris une position de repos dans laquelle la troisième partie est dans une position éloignée de la partie de connexion et une position de travail dans laquelle la troisième partie est dans une position rapprochée de la partie de connexion, ledit mécanisme de manœuvre étant configuré pour assurer la compression des moyens élastiques par le passage de la position de repos vers la position de travail lorsque la première partie est bloquée en coulissement par ledit arbre alors fixé à la seconde partie, l'outil de coupe alors en butée contre la canalisation.

De manière notable, le dispositif de perçage autorise la compression desdits moyens élastiques, lors du passage du mécanisme de manœuvre de la position de repos vers la position de travail, uniquement lorsque l'outil de coupe est en butée contre la canalisation, et que l'arbre est fixé à la deuxième partie. Autrement dit, il est impossible de comprimer lesdits moyens élastiques si l'outil de coupe n'est pas en appui contre la canalisation : on évite ainsi avantageusement les armements à vide du dispositif de perçage.

Les caractéristiques exposées dans les paragraphes suivants peuvent, optionnellement, être mises en œuvre. Elles peuvent être mises en œuvre indépendamment les unes des autres ou en combinaison les unes avec les autres :

La première partie peut comprendre un tube, coaxial à l'arbre et traversé par ledit arbre, et dans lequel les moyens élastiques comprennent un ressort à spires monté autour du tube, un épaulement saillant formant un siège pour une extrémité du ressort à spires, l'autre extrémité du ressort à spires étant en appui sur un siège formé sur la troisième partie.

Le mécanisme de manœuvre peut comprendre un levier de commande, articulé en pivot sur la troisième partie, ainsi qu'un couple came et suiveur de came répartis entre le corps et le levier de commande, le suiveur de came étant solidaire du corps et la came solidaire de la base du levier de commande, ledit mécanisme de manœuvre étant configuré pour prendre ladite position de repos correspondant à une première position relative de la came par rapport au suiveur de came, et ladite position de travail, obtenue par pivotement du levier de commande, et correspondant à une deuxième position relative de la came par rapport au suiveur de came, et dans lequel la came comprend un chemin de came formé sur une partie de base du levier de commande, le chemin étant de rayon variable par rapport à l'axe de rotation du levier de commande de rayon sensiblement décroissant pour le suiveur de came entre la position de repos et la position de travail du mécanisme de manœuvre afin de contraindre la troisième partie depuis la position éloignée de la partie de connexion vers la position rapprochée de la partie de connexion.

Le chemin de came présente deux butées en fin de course pour ledit suiveur de came; avec une première butée pour le suiveur de came dans la position de repos du mécanisme de manœuvre et une deuxième butée pour le suiveur de came dans la position de travail du mécanisme de manœuvre.

Le chemin de came peut être de rayon décroissant par rapport à l'axe de rotation pour le suiveur de came, immédiatement avant la deuxième fin de course puis de rayon brutalement croissant lorsque ledit suiveur de came arrive dans ladite deuxième fin de course, afin de constituer une position stable pour le suiveur de came dans le chemin de came dans ladite position de travail du mécanisme de manœuvre

La came et le suiveur de came du mécanisme de manœuvre peuvent être avantageusement logés dans un boitier configuré afin d'interdire les risques de pincement entre la came et le suiveur de came.

Le suiveur de came peut être un galet articulé en pivot sur le corps suivant un axe de pivot sensiblement perpendiculaire à l'arbre.

Le mécanisme de manœuvre peut comprendre deux dits leviers de manœuvre, chacun étant associé à un couple came et suiveur de came répartis entre le corps et le levier de commande, lesdits deux couples de came et suiveur de came étant réparties de part et d'autre de l'arbre.

La troisième partie forme un boitier recevant partiellement dans son intérieur, le corps au moins partiellement à l'extrémité opposée de la partie de connexion, ainsi que la première partie et dans lequel la troisième partie comporte une portée de guidage, interne, configurée pour coulisser sur une portée externe du corps.

L'outil de coupe est une pièce cylindrique, tubulaire, présentant une arête de coupe, discontinue, avec encoches, l'arête présente étant de préférence recouverte de poudre abrasive, telle que la poudre de diamant, et la paroi de la pièce cylindrique présentant une ouverture destinée à permettre l'écoulement d'un liquide. Un tel outil génère des déchets de coupe, de granulométrie fine, et de sorte que cette poudre puisse être entrainée dans la canalisation, et sans risque d'altération des équipements en aval, tel que des compteurs d'eau ou même les éléments d'obturation du robinet de prise en charge par exemple.

Le moyen de fixation amovible de l'arbre comprend un système de fixation par arc-boutement comprenant une tôle pourvue d'une ouverture de passage pour l'arbre, et un moyen résilient configuré pour la mise en biais de l'ouverture afin d'assurer un blocage par les frottements entre les bords de l'ouverture et ledit arbre.

L'arrêt axial engendré par ce dispositif est de préférence non symétrique, un tel système de fixation par arc-boutement assurant :
- un arrêt axial fort, afin d'éviter tout glissement entre l'arbre et la tôle, à savoir selon le sens opposé au sens de perçage, afin de permettre la compression des moyens élastiques, puis la transmission de l'effort de rappel des moyens élastiques pour que l'outil appuie contre la canalisation,
- un arrêt axial plus faible dans le sens opposé, à savoir suivant le sens de perçage, l'arbre pouvant éventuellement être déplacé vers la canalisation, en glissant au travers de la tôle du système de fixation par arc-boutement grâce à un léger effort de l'opérateur sur l'arbre, par exemple pour plaquer l'outil de coupe contre la canalisation.

L'invention et les variantes de celle-ci peuvent permettre, de manière générale, de proposer un dispositif de perçage convenant pour le perçage d'une canalisation en minimisant les efforts sur le collier de dérivation à l'instar du document FR 2 984 780 mais de mise en œuvre simplifiée par rapport à cette antériorité lors du perçage de la canalisation.

Aussi, l'invention concerne encore un procédé de perçage d'une canalisation comprenant un collier de dérivation pourvu d'un robinet, mis en œuvre par un dispositif de perçage selon l'invention dont la partie de connexion est solidarisée au robinet du collier de dérivation, ledit procédé comprenant les étapes suivantes :
- mise en place de l'arbre jusqu'à la mise en butée de l'outil de coupe sur la canalisation et fixation de l'arbre à la seconde partie du dispositif de perçage via le moyen de fixation amovible,
- passage du mécanisme de manœuvre de la première position de repos dans laquelle la troisième partie est dans une position éloignée de la partie de connexion vers la position de travail dans laquelle la troisième partie est dans une position rapprochée de la partie de connexion assurant ainsi la compression des moyens élastiques, ladite première partie étant bloquée en coulissement par ledit arbre alors fixé à la seconde partie, l'outil de coupe en butée contre la canalisation,
- couplage de l'extrémité distale de l'arbre à des moyens moteurs
- perçage par la mise en rotation de l'arbre et de l'outil de coupe, de telle façon que l'effort de perçage et l'avance de l'outil de coupe sont assurés uniquement par lesdits moyens élastiques.

### Brève description des dessins

D'autres caractéristiques, détails et avantages de l'invention apparaîtront à la lecture de la description détaillée ci-après, et à l'analyse des dessins annexés, sur lesquels :
**Fig. 1**
   [Fig. 1] montre un dispositif de perçage selon un mode de réalisation de l'invention, seul, c'est-à-dire non relié à un collier de dérivation d'une canalisation, dans la position de repos du mécanisme de manœuvre c'est-à-dire les moyens élastiques alors non en charge.
**Fig. 2**

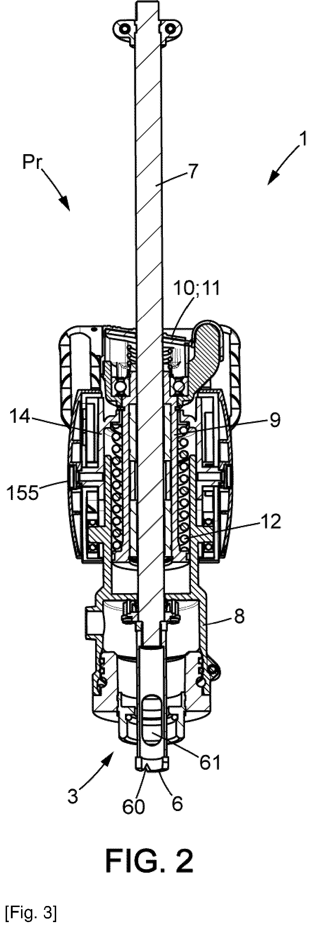

   [Fig. 2] est une vue de coupe du dispositif selon la figure 1 dans la position de repos du mécanisme de manœuvre, selon un plan passant par l'axe de l'arbre portant l'outil de coupe, et par les axes de rotation de deux leviers de commande du mécanisme de manœuvre, illustrant l'état non compressé du ressort à spires des moyens élastiques, la troisième partie formant un siège pour l'extrémité supérieure du ressort étant dans une position haute, éloignée de la partie de connexion du corps, autorisant au ressort de prendre une position déployée (non compressée).
**Fig. 3**

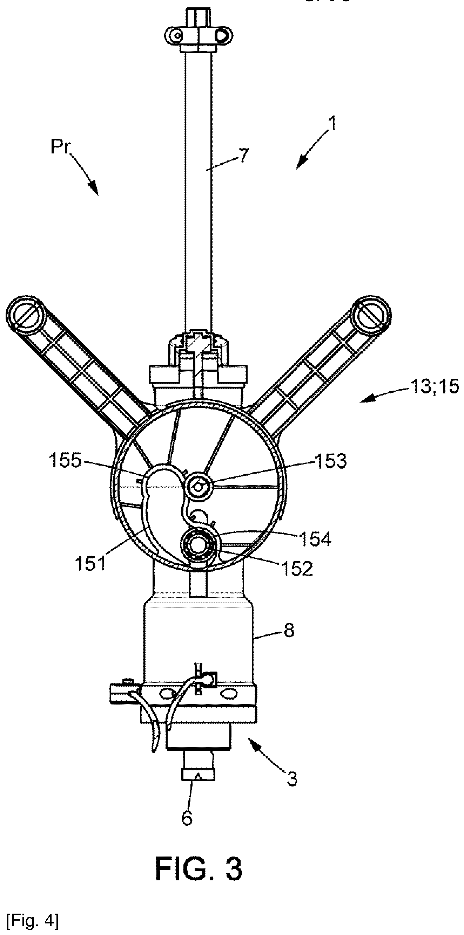

   [Fig. 3] est une vue du dispositif selon la figure 1, dans la position de repos du mécanisme de manœuvre selon un plan passant par la came et le suiveur de came associé à un des deux levier de commande du mécanisme de manœuvre, le suiveur de came étant contraint par le chemin de la came à prendre un rayon éloigné du centre de pivot du levier, contraignant la troisième partie par rapport au corps dans ladite position éloignée de la partie de connexion (ressort non compressé).
**Fig. 4**

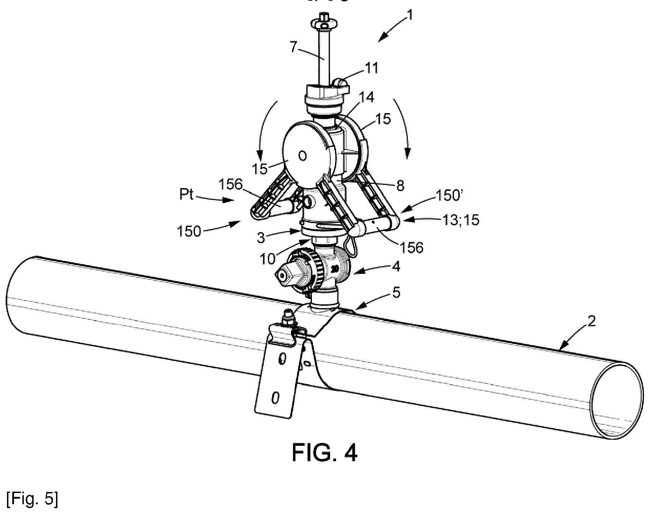

   [Fig. 4] est une vue du dispositif de perçage dont la partie de connexion du corps est fixée au robinet du collier de dérivation fixé par sa bride à la canalisation, l'arbre ayant été préalablement fixé à la seconde partie, dans la position de repos du mécanisme de manœuvre, de sorte que l'outil soit en butée contre la paroi de la canalisation, le mécanisme de manœuvre étant basculé dans la position de travail assurant la mise en charge des moyens élastiques.
**Fig. 5**

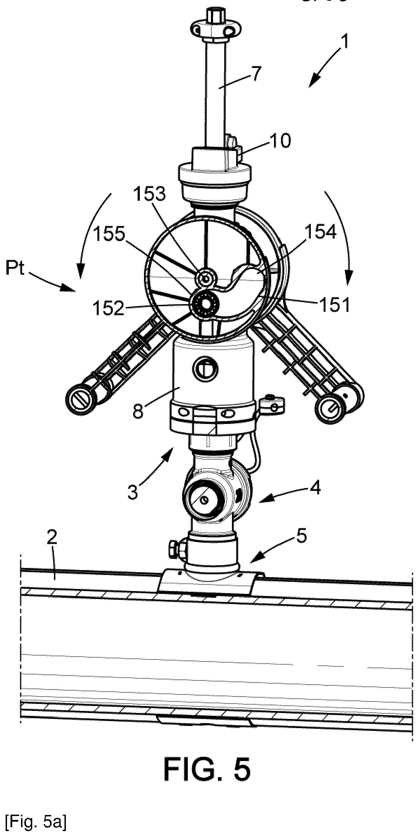

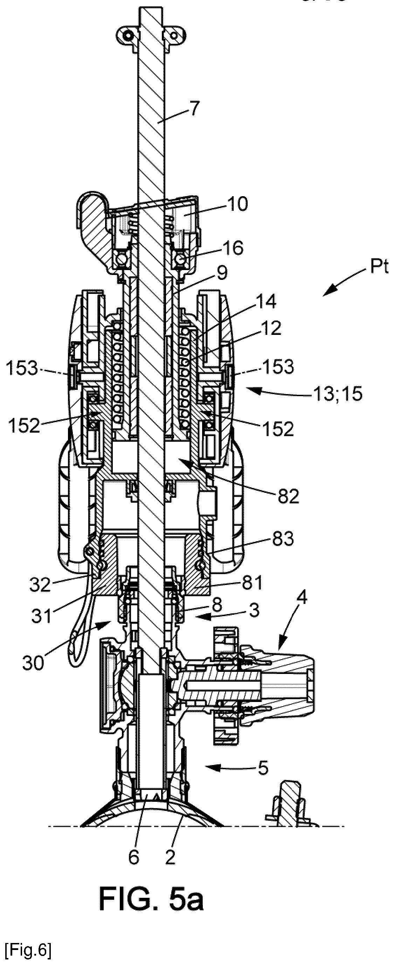

   [Fig. 5] est une vue de coupe du dispositif dans la position de travail selon la figure 4, illustrant plus particulièrement la position relative du suiveur de came (galet) dans le chemin de la came, contraignant le galet à prendre un rayon rapproché du centre de pivot du levier, contraignant la troisième partie par rapport au corps dans la position rapprochée par rapport à la partie de connexion afin de comprimer le ressort à spires.
**Fig. 5a**
   [Fig. 5a] est une vue de coupe du dispositif de la figure 4 selon un plan passant par l'axe de l'arbre et par l'axe passant par les axes de rotation des deux leviers de commande, illustrant plus particulièrement le ressort à spires des moyens élastiques en charge, à l'état compressé, ladite première partie alors bloquée en coulissement par ledit arbre alors fixé à la seconde partie de l'outil de coupe alors en butée contre la canalisation.
**Fig. 6**

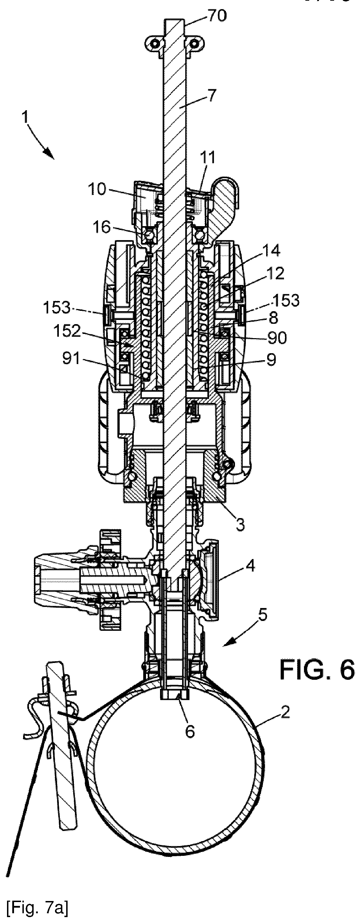

   [Fig. 6] est une vue de coupe du dispositif selon un plan passant par l'axe de l'arbre et par l'axe passant par les axes de pivots de deux leviers de commande, lors d'une étape successive à celle de la figure 5a, c'est-à-dire en fin de perçage, l'outil de coupe ayant traversé et percé la paroi de la canalisation, la course de déplacement de l'outil de coupe étant limitée par la mise en butée de la première partie contre le corps,
**.****Fig. 7a**
   [Fig. 7a] est une vue de détail du mécanisme de manœuvre alors en position de repos selon la figure 2, le ressort à spires (ressort en compression) des moyens élastiques étant non en charge (à l'état déployé) lorsque la troisième partie formant un siège pour l'extrémité supérieure du ressort est en position haute dans la position éloignée de la partie de connexion, et dans une position où la première partie n'est pas en butée contre le corps, bloqué par l'arbre et l'outil en butée contre la canalisation, la première partie étant susceptible de se déplacer vers la canalisation selon une course limitée sous la contrainte des moyens élastiques pour que l'outil de coupe traverse la paroi lorsque l'outil est mis en rotation.
**Fig. 7b**
   [Fig. 7b] est une vue de détail du mécanisme de manœuvre selon la figure 5, successive à l'étape de la figure 7a lors de la mise en œuvre du procédé de perçage, lorsque le mécanisme de manœuvre est passé dans la position de travail, le ressort à spires (ressort en compression) des moyens élastiques étant mis en charge (à l'état compressé) lorsque la troisième partie formant un siège pour l'extrémité supérieure du ressort est passé en position basse dans la position rapprochée de la partie de connexion, la première partie alors bloquée en coulissement par ledit arbre alors fixé à la seconde partie de l'outil de coupe alors en butée contre la canalisation.
**Fig. 7c**
   [Fig. 7c] est une vue successive à la figure 7b lors de la mise en œuvre du procédé de perçage, et correspondant à une vue de détail de la figure 6, le mécanisme de manœuvre dans sa position de travail, le ressort des moyens élastiques ayant été déployé en déplaçant la première partie et conjointement l'arbre et l'outil de coupe pour percer la canalisation, la course de la première partie étant limitée par la mise en butée de la première partie contre le corps.

### Description des modes de réalisation

Aussi, l'invention est relative à un dispositif de perçage 1 convenant pour le perçage d'une canalisation 2 en charge (ou non), comprenant une partie de connexion 3 configurée pour être fixée de manière amovible sur un robinet 4 d'un collier de dérivation 5, ainsi qu'un outil de coupe 6 déplaçable par rapport à ladite partie de connexion 3, configuré pour traverser ledit robinet 4 pour permettre le perçage de la canalisation 2.

Le dispositif selon l'invention comprend:
- un arbre 7 couplé à l'une de ses extrémités à l'outil de coupe 6 ; l'autre extrémité de l'arbre, dite extrémité distale 70 étant destinée à être reliée à des moyens moteurs pour l'entraînement en rotation de l'outil de coupe 6,
- un corps 8 rigidement solidaire de la partie de connexion 3,
- une première partie, mobile en coulissement par rapport audit corps 8 selon une course limitée, grâce à des moyens de guidage entre ladite première partie 9 et ledit corps 8, dirigés suivant une direction parallèle à l'arbre 7,
- une seconde partie 10, mobile en rotation par rapport à ladite première partie 9 grâce à des moyens de guidage en rotation entre ladite seconde partie et ladite première partie, d'axe confondu à celui de l'arbre, ladite seconde partie 10 étant solidaire en coulissement avec la première partie 9, ladite seconde partie 10 comprenant un moyen de fixation 11 amovible dudit arbre,
- des moyens élastiques 12 configurés pour contraindre ladite première partie 9, mobile, par rapport au corps 8 dans le sens de perçage
- des moyens 13 de mise en charge desdits moyens élastiques.

Un tel dispositif est configuré de sorte à permettre un perçage pendant lequel l'effort de perçage (effort de poussée) et l'avance de l'outil de coupe 6 sont assurés uniquement par les moyens élastiques 12. De manière avantageuse, et à l'instar du dispositif selon FR 2.984.784, l'effort de perçage n'excède ainsi jamais celui imposé par les moyens élastiques 12. On s'assure que les opérations de perçage n'altèrent pas le collier de dérivation sur lequel le dispositif de perçage est assujetti.

La course de l'outil de coupe est limitée de sorte à éviter que l'outil de coupe 6 ne viennent endommager la paroi de la canalisation opposée à celle qui vient d'être traversée par l'outil de coupe 6, en fin de perçage. Par exemple, en fin de course la première partie 9 vient en en contact avec une butée formée sur le corps 8.

En utilisation les moyens moteurs (non illustrés) peuvent comprendre une perceuse ou visseuse notamment du commerce. Les moyens moteurs sont couplés à l'extrémité distale 70 de l'arbre 7 qui peut être de section polygonale, tel que par exemple de section carrée ou hexagonale. En utilisation, les moyens moteurs sont bloqués en rotation, soit par la main de l'utilisateur lui-même, soit par un support mécanique (non illustré) configuré pour accompagner le déplacement de l'arbre. Dans le cas où l'utilisateur bloque la rotation des moyens moteurs, il n'exerce aucun effort dans la direction de l'arbre, suivant le sens de poussée ou dans le sens opposé.

De manière notable, les moyens 13 de mise en charge comprennent :
- une troisième partie 14, mobile en coulissement par rapport au corps 8 et par rapport à la première partie 9, lesdits moyens élastiques 12 étant prévus pour être compressés entre un appui formé sur la troisième partie 14, et un appui formé sur la première partie 9 de sorte que lesdits moyens élastiques 12 sont configurés pour être compressés par déplacement de la troisième partie 14 par rapport au corps 8, tandis que la première partie 9 reste fixe par rapport audit corps 8,
- un mécanisme 15 de manœuvre entre le corps 8 et la troisième partie 14 configuré pour assurer le déplacement de la troisième partie 14 sur le corps 8 suivant le sens de perçage ; ledit mécanisme de manœuvre 15 étant configuré pour prendre deux positions, y compris une position de repos Pr dans laquelle la troisième partie 14 est dans une position éloignée de la partie de connexion 3, et une position de travail Pt dans laquelle la troisième partie 14 est dans une position rapprochée de la partie de connexion 3.

Selon l'invention, le mécanisme de manœuvre 15 est ainsi configuré pour assurer la compression des moyens élastiques 12 par le passage de la position de repos Pr vers la position de travail Pt lorsque la première partie 9 est bloquée en coulissement par ledit arbre 7 alors fixé à la seconde partie 10, l'outil de coupe 6 alors en butée contre la canalisation 2, et comme illustrés aux figures 5 et 5a.

Un tel dispositif de perçage permet ainsi la mise en œuvre d'un procédé de perçage, la partie de connexion 3 du dispositif de perçage étant préalablement alors solidarisée au robinet 4 du collier de dérivation 5, ledit procédé comprenant les étapes suivante
- mise en place de l'arbre 7 jusqu'à la mise en butée 6 de l'outil de coupe sur la canalisation 2 et fixation de l'arbre à la seconde partie 10 du dispositif de perçage via le moyen 11 de fixation amovible,
- passage du mécanisme de manœuvre 15 de la première position de repos Pr dans laquelle la troisième partie 14 est dans une position éloignée de la partie de connexion 3 vers la position de travail Pt dans laquelle la troisième partie 14 est dans une position rapprochée de la partie de connexion 3 assurant ainsi la compression des moyens élastiques 12, ladite première partie 9 étant bloquée en coulissement par ledit arbre 7 alors fixé à la seconde partie 10, l'outil de coupe 6 en butée contre la canalisation 2,
- couplage de l'extrémité distale de l'arbre 7 à des moyens moteurs
- perçage par la mise en rotation conjointe de l'arbre 7 et de l'outil de coupe 6, de telle façon que l'effort de perçage et l'avance de l'outil de coupe 6 sont assurés uniquement par lesdits moyens élastiques 12.

Selon le procédé selon invention, la fixation de l'arbre 7 portant l'outil de coupe 6 se fait nécessairement avant la mise en compression des moyens élastique 12. A défaut la première partie coulisserait librement dans le corps lorsque le mécanisme est passé en position de travail et les moyens élastiques ne seraient alors pas compressés lors de cette étape. On interdit ainsi l'armement à vide du dispositif de perçage selon l'invention Par comparaison, et dans le dispositif de perçage selon FR 2.984.784 la mise en charge des moyens élastiques ne nécessite pas la fixation préalable de l'arbre et la mise en butée de l'outil de coupe. Au contraire, et selon le fonctionnement du dispositif de perçage selon FR 2.984.784 il est obligatoire de fixer l'arbre, mais seulement après la mise en charge des moyens élastiques, qui s'opère par la traction et le blocage de la première partie par rapport au corps, suivant un sens opposé au sens de perçage. En conséquence, une étape de libération des moyens de mise en charge est obligatoire afin que les moyens élastiques contraignent l'outil de coupe contre la canalisation et soient susceptibles de déplacer l'outil de coupe lors du perçage.

La structure du dispositif de perçage selon l'invention est ainsi avantageuse par rapport à celui du document FR 2.984.784 en ce qu'elle supprime la nécessité de cette étape de libération, avant la mise en œuvre de la rotation de l'outil de coupe et du perçage de la canalisation. Le procédé de perçage en est avantageusement simplifié et plus rapide de mise en œuvre. Il réduit par ailleurs les possibilités d'erreur pour l'opérateur, ainsi que l'armement à vide, tel qu'expliqué plus haut.

Le corps 8 est de préférence un corps creux, tubulaire traversé suivant son axe longitudinal par l'arbre 7 qui ressort du dispositif de perçage à son extrémité distale 70 pour permettre son couplage aux moyens moteurs, et ressort à son extrémité proximale portant l'outil de coupe 6, de l'autre côté. Ce corps 8 est équipé de la partie de connexion 3 à l'une de ces extrémités, dite extrémité proximale 81, et présente à son autre extrémité une cavité 82 à l'intérieur de laquelle la première partie 9 est configurée pour coulisser. La cavité peut être cylindrique, la première partie présentant un élément coulissant tel qu'un piston coulissant dans cette cavité 82.

La partie de connexion 3 peut comprendre une partie filetée 30, notamment un taraudage destinée à être fixée par vissage sur une partie filetée du robinet du collier de dérivation. La partie de connexion 3 peut encore comprendre un adaptateur 31 amovible par rapport au corps portant la partie filetée 30. La partie de fixation 83 entre l'adaptateur 31 et le corps 8 peut comprendre un système d'agrafe, voire encore un taraudage du corps 8 à l'intérieur duquel est vissé l'adaptateur 31 présentant alors une seconde partie filetée 32.

L'adaptateur 31 est changé en fonction des caractéristiques de la partie filetée du robinet. Le dispositif de perçage peut comprendre un jeu de plusieurs adaptateurs 31, afin de pouvoir être fixé à différents robinets de collier de dérivation.

La première partie 9 peut comprendre un tube 90, notamment cylindrique, coaxial à l'arbre 7 et traversé par ledit arbre 7. Les moyens élastiques 12 peuvent être un ressort à spires monté autour du tube 90. Un épaulement 91 en saillie forme un siège pour une extrémité du ressort à spires, l'autre extrémité du ressort à spires étant en appui sur un siège 140 formé sur la troisième partie 14.

De manière générale, il est à noter que les moyens élastiques 12 peuvent éventuellement prendre d'autres formes telles qu'un ressort pneumatique.

Le mécanisme 15 de manœuvre peut comprendre un levier de commande150, 150', articulé en pivot sur la troisième partie 14, ainsi qu'un couple came 151 et suiveur de came 152 répartis entre le corps 8 et le levier 150 ; 150'. Le suiveur de came 152 peut être solidaire du corps 8 et la came 151 solidaire de la base du levier de commande. L'inversion des positions de la came et du suiveur est possible, mais non illustrée.

Ledit mécanisme de manœuvre est configuré pour prendre ladite position de repos Pr correspondant à une première position relative de la came 151 par rapport au suiveur de came 152, et ladite position de travail Pt est obtenue par pivotement du levier de commande 150 ; 150', correspondant à une deuxième position relative de la came 151 par rapport au suiveur de came 152. Le pivotement du levier 150, 150' assurant le changement entre les deux positions Pr et Pt peut être d'un angle compris entre 45° et 135 °, tel que 90° La came 151 comprend un chemin de came formé sur une partie de base du levier de commande 150 ; 150', le chemin étant de rayon variable par rapport à l'axe de rotation 153 (ou de pivot) du levier de commande de rayon lors de la rotation du levier autour de l'axe de rotation 153.

Lorsque la came 151 est solidaire du levier et le suiveur de came 152 solidaire de la troisième partie 14, le rayon du chemin de came 151 peut être sensiblement décroissant pour le suiveur de came 152 lorsque ce dernier se déplace dans le chemin de came entre la position de repos Pr et la position de travail Pt.

Autrement dit :
- dans la position de repos Pr telle qu'illustrée à la figure 3, on remarque que le suiveur de came 152 (en l'espèce un galet) est dans la portion du chemin de la came 151 de rayon le plus éloigné de l'axe de rotation 153.
- dans la position de travail Pt, telle qu'illustrée à la figure 5, on remarque que le suiveur de came 152 (en l'espèce un galet) est dans la portion du chemin de la came 151 de rayon proche de l'axe de rotation 153.

La différence des rayons entre la position du suiveur de came 152 respectivement dans la position éloignée et dans la position proche de l'axe de rotation correspond à une course Cc de la troisième partie 14 sur le corps 8, imposée par le mécanisme de manœuvre 15. Cette course de la troisième partie 14 sur le corps assure la compression des moyens élastiques 12 d'un même déplacement. Cette course Cc est visible à la figure 7b. Le mécanisme de manœuvre 15 contraint ainsi la troisième partie 14 depuis la position éloignée de la partie de connexion 3, telle qu'illustrée à la figure 7a vers la position rapprochée de la partie de connexion 3 telle qu'illustrée à la figure 7b et suivant une course égale à la couse Cc.

A la figure 7b on a repéré la course Co permise pour la première partie 9 dans la cavité 82 du corps, et avant que la première partie 9 arrive en butée de fin de course. Cette course Co est la course permise par l'outil de coupe 6 suivant la direction de l'arbre 7 pour assurer le perçage de la canalisation sous l'action des moyens élastiques 12.

Le chemin de la came 151 peut présenter deux butées en fin de course pour ledit suiveur de came 152 ; avec une première butée 154 pour le suiveur de came 152 dans la position de repos Pr du mécanisme de manœuvre et une deuxième butée 155 pour le suiveur de came dans la position de travail Pt du mécanisme de manœuvre.

Selon un mode de réalisation, le chemin de came est de rayon décroissant par rapport à l'axe de rotation 153 du levier de commande pour le suiveur de came 152, immédiatement avant la deuxième fin de course 155 puis de rayon brutalement croissant lorsque ledit suiveur de came 152 arrive dans ladite deuxième fin de course 155. La deuxième fin de course 155 constitue alors une position stable du suiveur de came 152 dans le chemin de came dans ladite position de travail Pt du mécanisme de manœuvre 15. Autrement dit, la stabilité de la position de travail Pt assurant la compression des moyens élastiques est assurée par la trajectoire particulière de la came 151 (le chemin de came) et sa coopération avec la suiveur de came 152.

De manière générale, le suiveur de came 152 peut être un galet articulé en pivot notamment sur le corps 8 suivant un axe de pivot sensiblement perpendiculaire à l'arbre 7.

Selon un mode de réalisation illustré aux figures; le mécanisme de manœuvre 15 comprend deux dit leviers de manœuvre 150 ; 150', chacun étant associé à un couple came 151 et suiveur de came 152 répartis entre le corps 8 et le levier de commande, lesdits deux couples de came 151 et suiveur de came 152 étant répartis de part et d'autre de l'arbre 7.

Un tel mode de réalisation est illustré aux figures à titre d'exemple non limitatif. Les axes de rotation 153 des deux leviers de commande 150 ; 150' sont confondus, les chemins de came des deux couples présentant une trajectoire en miroir afin d'imposer un même déplacement à la troisième partie 14 lors de la mise en rotation synchronisée des leviers de commande 150, 150' en des sens contraires.

Il est encore à noter que chaque levier 150 (resp 150 ') de commande peut être à branches double, avec une première branche présentant la came 151 au niveau de la base du levier articulé en rotation sur la troisième partie 14, d'un côté de l'arbre 7, une deuxième branche (parallèle) étant articulée à sa base de l'autre côté suivant le même axe de rotation 153 de la came de l'autre levier 150' (resp 150), et sans être liée à la came de ce côté. Les deux branches de levier à branches double sont solidaires l'une à l'autre par leur extrémité distale via une poignée 156.

Selon un mode de réalisation avantageux illustré aux figures à titre d'exemple non limitatif, on constate que la came 151 et le suiveur de came 152 du mécanisme de manœuvre 15 sont logés dans un boitier. Ce boitier est avantageusement configuré afin d'interdire les risques de pincement entre la came 151 et le suiveur de came 152.

De manière générale, la troisième partie 14 peut former un boitier recevant partiellement dans son intérieur le corps 8 au moins partiellement à l'extrémité opposée de la partie de connexion 3, et la première partie 9 à fonction de coulisseau. On constate ainsi que la troisième partie 14 comporte une portée de guidage 141, interne, configurée pour coulisser sur une portée de guidage externe 80 du corps 8.

Les moyens de guidage en rotation entre ladite seconde partie 10 et ladite première partie 9, d'axe de rotation confondu à celui de l'arbre peuvent être un palier ou un roulement 16, et comme visible à la figure .6.

Le moyen 11 de fixation amovible de l'arbre comprend un système de fixation par arc-boutement comprenant une tôle 110 pourvue d'une ouverture de passage 111 pour l'arbre, et un moyen résilient 112 configuré pour la mise en biais de l'ouverture, et ainsi l'obtention du blocage par les frottements entre les bords de l'ouverture et ledit arbre. Ce système de fixation assure automatiquement l'arrêt axial de l'arbre 7 par la tôle grâce à la mise en biais de la tôle et l'arc-boutement ainsi crée entre l'arbre et cette tôle. Pour retirer l'arbre, il suffit de presser manuellement la tôle sur une partie d'appui 114 de la tôle à l'encontre de la force de rappel du moyen résilient 112 qui pivote autour d'un point de pivot 113, et jusqu'à une position de la tôle annihilant l'arc-boutement

L'arrêt axial engendré par ce dispositif est de préférence non symétrique, un tel système de fixation par arc-boutement assurant :
- un arrêt axial fort, afin d'éviter tout glissement de l'arbre dans la tôle, selon le sens opposé au sens de perçage, afin de permettre la compression des moyens élastiques, puis la transmission de l'effort de rappel des moyens élastiques lorsque l'outil de coupe appuie contre la canalisation,
- un arrêt axial plus faible dans le sens opposé, à savoir suivant le sens de perçage, l'arbre pouvant éventuellement être déplacé vers la canalisation, en glissant au travers de la tôle (du système de fixation par arc-boutement) grâce à un léger effort de l'opérateur sur l'arbre, par exemple pour plaquer l'outil de coupe contre la canalisation. Les frottements entre l'arbre et la tôle sont toutefois de préférence suffisant afin de retenir l'arbre et l'outil de coupe en fin perçage, en s'opposant à la gravité.

L'outil de coupe 6 peut être une pièce cylindrique, tubulaire, présentant une arrête de coupe 60, de préférence discontinue, avec la présence d'encoches 61 de préférence réparties régulièrement sur la circonférence de l'arête. L'arête peut être recouverte de poudre abrasive, telle que la poudre de diamant. La paroi de la pièce cylindre peut présenter une ouverture destinée à permettre l'écoulement d'un liquide. Cette ouverture est de préférence dimensionnée suffisamment large afin de permettre la récupération de la partie de la canalisation, qui vient d'être coupée, et d'afin d'éviter que cette partie tombe dans la canalisation.

### Application industrielle

L'invention peut trouver à s'appliquer notamment dans le domaine de l'adduction d'eau lorsqu' il est nécessaire de créer de nouveau raccordement à une canalisation.

### Liste des signes de référence

1 : Dispositif de perçage
2. Canalisation
3. Partie de connexion,
30. Partie filetée (fixation au robinet)
31. Adaptateur
32. Seconde partie filetée (fixation au adaptateur au corps)
4. Robinet
5. Collier de dérivation,
6 Outil de coupe
60. Arête de coupe
61. Encoches
7. Arbre
8.Corps
80. Portée de guidage externe
81. Extrémité proximale
82. Cavité
83. partie de fixation (de l'adaptateur au corps)
9. Première partie
90. Tube
91. Epaulement
10. Seconde partie,
11. Moyen de fixation,
110. Tôle ;
111. Ouverture de passage
112. Moyen résilient,
113. Point de pivot
114. Partie d'appui
12. Moyens élastiques
13. Moyens de mise en charge desdits moyens élastique
14. Troisième partie,
140. Siège
141. Portée de guidage interne
15. Mécanisme de manœuvre,
150, 150'. Levier de commande,
151, 152. Came et suiveur de came,
153. Axe rotation du levier de commande
154, 155. Première butée de fin de course et deuxième butée de fin de course
156. Poignée (du levier de commande 150 ou 150' à double branches)
Cc Course de la troisième partie imposé par le mécanisme de manœuvre.
Co. Course limitée de la première partie dans le corps
Pt. Position de travail,
Pr. Position de repos

## Revendications

1. Dispositif de perçage (1) convenant pour le perçage d'une canalisation (2) en charge, comprenant une partie de connexion (3) configurée pour être fixée de manière amovible sur un robinet (4) d'un collier de dérivation (5), ainsi qu' un outil de coupe (6) déplaçable par rapport à ladite partie de connexion (3), configuré pour traverser ledit robinet (4) pour permettre le perçage de la canalisation (2), ledit dispositif de perçage (1) comprenant :
- un arbre (7) couplé à l'une de ses extrémités à l'outil de coupe ; l'autre extrémité de l'arbre étant destinée à être reliée à des moyens moteurs pour l'entraînement en rotation de l'outil de coupe,
- un corps (8) rigidement solidaire de la partie de connexion (3),
- une première partie (9), mobile en coulissement par rapport audit corps (8) selon une course limitée, grâce à des moyens de guidage entre ladite première partie et ledit corps, dirigés suivant une direction parallèle à l'arbre,
- une seconde partie (10), mobile en rotation par rapport à ladite première partie grâce à des moyens de guidage en rotation entre ladite seconde partie et ladite première partie, d'axe confondu à celui de l'arbre, ladite seconde partie comprenant un moyen de fixation (11) amovible dudit arbre,
- des moyens élastiques (12) configurés pour contraindre ladite première partie mobile par rapport au corps dans le sens de perçage,
- des moyens (13) de mise en charge desdits moyens élastiques ledit dispositif étant configuré de sorte à permettre un perçage pendant lequel l'effort de perçage et l'avance de l'outil de coupe sont assurés uniquement par les moyens élastiques,
**caractérisé en ce que** les moyens (13) de mise en charge comprennent:
- une troisième partie (14), mobile en coulissement par rapport au corps (8) et par rapport à la première partie (9), lesdits moyens élastiques (12) étant prévus pour être compressés entre un appui formé sur la troisième partie (14), et un appui formé sur la première partie (9) de sorte que lesdits moyens élastiques sont configurés pour être compressés par déplacement de la troisième partie par rapport au corps, tandis que la première partie reste fixe par rapport audit corps,
- un mécanisme (15) de manœuvre entre le corps (8) et la troisième partie (14) configuré pour assurer le déplacement de la troisième partie (14) sur le corps (8) suivant le sens de perçage ledit mécanisme de manœuvre (15) étant configuré pour prendre deux positions, y compris une position de repos (Pr) dans laquelle la troisième partie (14) est dans une position éloignée de la partie de connexion (3), et une position de travail (Pt) dans laquelle la troisième partie (14) est dans une position rapprochée de la partie de connexion (3), ledit mécanisme de manœuvre (15) étant configuré pour assurer la compression des moyens élastiques (12) par le passage de la position de repos (Pr) vers la position de travail (Pt) lorsque la première partie (9) est bloquée en coulissement par ledit arbre (7) alors fixé à la seconde partie (10), l'outil de coupe (6) alors en butée contre la canalisation (2).

2. Dispositif selon la revendication 1, dans lequel la première partie (9) comprend un tube (90), coaxial à l'arbre et traversé par ledit arbre (7), et dans lequel les moyens élastiques (12) comprennent un ressort à spires monté autour du tube (90), un épaulement (91) saillant formant un siège pour une extrémité du ressort à spires, l'autre extrémité du ressort à spires étant en appui sur un siège (140) formé sur la troisième partie (14).

3. Dispositif selon la revendication 1 ou 2, dans lequel le mécanisme (15) de manœuvre comprend un levier de commande (150, 150'), articulé en pivot sur la troisième partie (14), ainsi qu'un couple came (151) et suiveur de came (152) répartis entre le corps (8) et le levier (150 ; 150'), le suiveur de came (152) étant solidaire du corps (8) et la came (151) solidaire de la base du levier de commande, ledit mécanisme de manœuvre étant configuré pour prendre ladite position de repos (Pr) correspondant à une première position relative de la came (151) par rapport au suiveur de came (152), et ladite position de travail (Pt), obtenue par pivotement du levier de commande (150 ; 150'), et correspondant à une deuxième position relative de la came (151) par rapport au suiveur de came (152), et dans lequel la came (151) comprend un chemin de came formé sur une partie de base du levier de commande (150 ; 150'), le chemin étant de rayon variable par rapport à l'axe de rotation (153) du levier de commande de rayon sensiblement décroissant pour le suiveur de came (152) entre la position de repos (Pr) et la position de travail (Pt) afin de contraindre la troisième partie (14) depuis la position éloignée de la partie connexion (3) vers la position rapprochée de la partie de connexion (3).

4. Dispositif selon la revendication 3 dans lequel le chemin de came présente deux butées en fin de course pour ledit suiveur de came (152) ; avec une première butée (154) pour le suiveur de came dans la position de repos (Pr) du mécanisme de manœuvre et une deuxième butée (155) pour le suiveur de came dans la position de travail (Pt) du mécanisme de manœuvre.

5. Dispositif selon la revendication 4 dans lequel le chemin de came est de rayon décroissant par rapport à l'axe de rotation (153) pour le suiveur de came (152), immédiatement avant la deuxième fin course (155) puis de rayon brutalement croissant lorsque ledit suiveur de came arrive dans ladite deuxième fin de course (155), afin de constituer une position stable du suiveur de came (152) dans le chemin de came dans ladite position de travail (Pt) du mécanisme de manœuvre (15).

6. Dispositif selon la revendication 3, 4 ou 5 dans lequel la came (151) et le suiveur de came (152) du mécanisme de manœuvre (15) sont logés dans un boitier (155) configuré afin d'interdire les risques de pincement entre la came (151) et le suiveur de came (152).

7. Dispositif selon l'une des revendications 3 à 6, dans lequel le suiveur de came (152) est un galet articulé en pivot sur le corps (8) suivant un axe de pivot sensiblement perpendiculaire à l'arbre (7).

8. Dispositif selon l'une quelconque des revendications 3 à 7, dans lequel le mécanisme de manœuvre (15) comprend deux dits leviers de manœuvre (150 ; 150'), chacun étant associé à un couple came (151) et suiveur de came (152) répartis entre le corps (8) et le levier de commande, lesdits deux couples de came (151) et suiveur de came (152) étant réparties de part et d'autre de l'arbre (7).

9. Dispositif selon l'une quelconque des revendications 1 à 8, dans lequel la troisième partie (14) forme un boitier recevant partiellement dans son intérieur :
- le corps (8) au moins partiellement à l'extrémité opposée de la partie de connexion (3),
- la première partie (9),
et dans lequel la troisième partie (14) comporte une portée de guidage (141), interne, configurée pour coulisser sur une portée externe (80) du corps (8).

10. Dispositif selon l'une des revendications 1 à 9, dans lequel l'outil de coupe (6) est une pièce cylindrique, tubulaire, présentant une arête de coupe (60), discontinue, avec encoches (61), l'arête présente étant recouverte de poudre de diamant, et la paroi de la pièce cylindrique présentant une ouverture destinée à permettre l'écoulement d'un liquide.

11. Dispositif selon l'une des revendications 1 à 10, dans lequel le moyen (11) de fixation amovible de l'arbre comprend un système de fixation par arc-boutement comprenant une tôle (110) pourvue d'une ouverture de passage (111) pour l'arbre, et un moyen résilient (112) configuré pour la mise en biais de l'ouverture afin d'assurer un blocage par les frottements entre les bords de l'ouverture et ledit arbre.

12. Procédé de perçage d'une canalisation comprenant un collier de dérivation pourvu d'un robinet, mis en œuvre par un dispositif de perçage (1) selon l'une quelconques des revendications 1 à 11 dont la partie de connexion est solidarisée au robinet (4) du collier de dérivation (5), ledit procédé comprenant les étapes suivantes :
- mise en place de l'arbre (7) jusqu'à la mise en butée (6) de l'outil de coupe sur la canalisation (2) et fixation de l'arbre à la seconde partie du dispositif de perçage via le moyen (11) de fixation amovible,
- passage du mécanisme de manœuvre (15) de la première position de repos (Pr) dans laquelle la troisième partie (14) est dans une position éloignée de la partie de connexion (3) vers la position de travail (Pt) dans laquelle la troisième partie (14) est dans une position rapprochée de la partie de connexion (3) assurant ainsi la compression des moyens élastiques (12), ladite première partie étant bloquée en coulissement par ledit arbre (7) alors fixé à la seconde partie (10), l'outil de coupe (6) en butée contre la canalisation (2),
- couplage de l'extrémité distale de l'arbre (7) à des moyens moteurs,
- perçage par la mise en rotation de l'arbre et de l'outil de coupe, de telle façon que l'effort de perçage et l'avance de l'outil de coupe (6) sont assurés uniquement par lesdits moyens élastiques (12).

## Patentansprüche

1. Bohrvorrichtung (1), die für das Bohren einer Kanalisation (2) unter Druck geeignet ist, die einen Anschlussteil (3) umfasst, der dazu konfiguriert ist, abnehmbar auf einem Hahn (4) eines Abzweigbundes (5) befestigt zu sein, sowie ein Schneidwerkzeug (6), das in Bezug auf den Anschlussteil (3) verlagerbar ist, konfiguriert, um den Hahn (4) zu durchqueren, um das Bohren der Kanalisation (2) zu erlauben, wobei die Bohrvorrichtung (1) umfasst:
- eine Welle (7), die an einem ihrer Enden mit dem Schneidwerkzeug gekoppelt ist; wobei das andere Ende der Welle dazu bestimmt ist, mit Motormitteln zum Antreiben in Drehung des Schneidwerkzeugs verbunden zu sein,
- einen Körper (8), der starr mit dem Anschlussteil (3) verbunden ist,
- einen ersten Teil (9), der in Verschiebung in Bezug auf den Körper (8) entlang eines begrenzten Hubs dank Führungsmitteln zwischen dem ersten Teil und dem Körper, die entlang einer Richtung parallel zu der Welle gerichtet sind, beweglich ist,
- einen zweiten Teil (10), der in Drehung in Bezug auf den ersten Teil dank der Führungsmittel in Drehung zwischen dem zweiten Teil und dem ersten Teil beweglich ist, mit einer Achse, die mit der der Welle zusammenfällt, wobei der zweite Teil ein abnehmbares Befestigungsmittel (11) der Welle umfasst,
- elastische Mittel (12), die dazu konfiguriert sind, den ersten beweglichen Teil in Bezug auf den Körper in die Bohrrichtung zu pressen,
- Mittel (13) zum Spannen der elastischen Mittel,
wobei die Vorrichtung derart konfiguriert ist, dass ein Bohren erlaubt wird, während dem die Bohrkraft und der Vorschub des Schneidwerkzeugs nur von den elastischen Mitteln sichergestellt sind,
**dadurch gekennzeichnet, dass** die Mittel (13) zum Spannen umfassen:
- einen dritten Teil (14), der in Verschiebung in Bezug auf den Körper (8) und in Bezug auf den ersten Teil (9) beweglich ist, wobei die elastischen Mittel (12) dazu vorgesehen sind, zwischen einer Auflage, die auf dem dritten Teil (14) gebildet ist, und einer Auflage, die auf dem ersten Teil (9) gebildet ist, derart komprimiert zu werden, dass die elastischen Mittel dazu konfiguriert sind, in Verlagerung von dem dritten Teil in Bezug auf den Körper komprimiert zu werden, während der erste Teil in Bezug auf den Körper stationär bleibt,
- einen Betätigungsmechanismus (15) zwischen dem Körper und dem dritten Teil (14), der dazu konfiguriert ist, die Verlagerung des dritten Teils (14) auf dem Körper (8) entlang der Bohrrichtung sicherzustellen, wobei der Betätigungsmechanismus (15) dazu konfiguriert ist, zwei Positionen einzunehmen, einschließlich einer Ruheposition (Pr), in der der dritte Teil (14) in einer von dem Anschlussteil (3) entfernten Position ist, und einer Arbeitsposition (Pt), in der der dritte Teil (14) in einer dem Anschlussteil (3) angenäherten Position ist, wobei der Betätigungsmechanismus (15) dazu konfiguriert ist, die Kompression der elastischen Mittel (12) durch den Übergang von der Ruheposition (Pr) zu der Arbeitsposition (Pt) sicherzustellen, wenn der erste Teil (9) in Verschiebung von der Welle (7) blockiert ist, die dabei an dem zweiten Teil (10) befestigt ist, während das Schneidwerkzeug (6) gegen die Kanalisation (2) im Anschlag ist.

2. Vorrichtung nach Anspruch 1, wobei der erste Teil (9) ein Rohr (90) umfasst, das zu der Welle koaxial ist und von der Welle (7) durchquert ist, und wobei die elastischen Mittel (12) eine gewickelte Feder umfassen, die um das Rohr (90) montiert ist, eine hervorragende Schulter (91), die einen Sitz für ein Ende der gewickelten Feder bildet, wobei das andere Ende der gewickelten Feder auf einem Sitz (140), der auf dem dritten Teil (14) gebildet ist, aufliegt.

3. Vorrichtung nach Anspruch 1 oder 2, wobei der Betätigungsmechanismus (15) einen Steuerhebel (150, 150') umfasst, der schwenkbar auf dem dritten Teil (14) angelenkt ist, sowie ein Paar aus Nocken (151) und Nockenstößel (152), das zwischen dem Körper (8) und dem Hebel (150; 150') aufgeteilt ist, wobei der Nockenstößel (152) fest mit dem Körper (8) verbunden ist, und der Nocken (151) fest mit der Basis des Steuerhebels verbunden ist, wobei der Betätigungsmechanismus dazu konfiguriert ist, die Ruheposition (Pr) einzunehmen, die einer ersten Position in Bezug auf den Nocken (151) bezüglich des Nockenstößels (152) entspricht, und die Arbeitsposition (Pt), die durch Schwenken des Steuerhebels (150; 150') erhalten wird und einer zweiten Position in Bezug auf den Nocken (151) bezüglich des Nockenstößel (152) entspricht, und wobei der Nocken (151) eine Kurvenbahn umfasst, die auf einem Basisteil des Steuerhebels (150; 150') gebildet ist, wobei die Bahn einen variablen Radius in Bezug auf die Drehachse (153) des Steuerhebel mit Radius im Wesentlichen abnehmend für den Nockenstößel (152) zwischen der Ruheposition (Pr) und der Arbeitsposition (Pt) aufweist, um den dritten Teil (14) ausgehend von der von dem Anschlussteil (3) entfernten Position zu der dem Anschlussteil (3) angenäherten Position zu pressen.

4. Vorrichtung nach Anspruch 3, wobei die Kurvenbahn zwei Anschläge am Hubende für den Nockenstößel (152) umfasst; mit einem ersten Anschlag (154) für den Nockenstößel in der Ruheposition (Pr) des Betätigungsmechanismus und einem zweiten Anschlag (155) für den Nockenstößel in der Arbeitsposition (Pt) des Betätigungsmechanismus.

5. Vorrichtung nach Anspruch 4, wobei die Kurvenbahn einen in Bezug auf die Drehachse (153) abnehmenden Radius für den Nockenstößel (152) unmittelbar vor dem zweiten Hubende (155) aufweist, dann einen plötzlich zunehmenden Radius, wenn der Nockenstößel in dem zweiten Hubende (155) ankommt, um eine stabile Position des Nockenstößels (152) in der Kurvenbahn in der Arbeitsposition (Pt) des Betätigungsmechanismus (15) zu bilden.

6. Vorrichtung nach Anspruch 3, 4 oder 5, wobei der Nocken (151) und der Nockenstößel (152) des Betätigungsmechanismus (15) in einem Gehäuse (155) untergebracht sind, das dazu konfiguriert ist, Klemmgefahren zwischen dem Nocken (151) und dem Nockenstößel (152) zu unterbinden.

7. Vorrichtung nach einem der Ansprüche 3 bis 6, wobei der Nockenstößel (152) eine schwenkend auf dem Körper (8) entlang einer Schwenkachse im Wesentlichen senkrecht zu der Welle (7) angelenkte Walze ist.

8. Vorrichtung nach einem der Ansprüche 3 bis 7, wobei der Betätigungsmechanismus (15) zwei Betätigungshebel (150; 150') umfasst, die jeweils mit einem Paar aus Nocken (151) und Nockenstößel (152) assoziiert sind, die zwischen dem Körper (8) und dem Steuerhebel aufgeteilt sind, wobei die zwei Paare aus Nocken (151) und Nockenstößel (152) auf jeder Seite der Welle (7) aufgeteilt sind.

9. Vorrichtung nach einem der Ansprüche 1 bis 8, wobei der dritte Teil (14) ein Gehäuse bildet, das teilweise in seinem Inneren aufnimmt:
- den Körper (8) mindestens teilweise an dem Ende, das dem Anschlussteil (3) entgegengesetzt ist,
- den ersten Teil (9),
und wobei der dritte Teil (14) eine interne Führungsauflage (141) umfasst, die dazu konfiguriert ist, auf einer externen Auflage (80) des Körpers (8) zu gleiten.

10. Vorrichtung nach einem der Ansprüche 1 bis 9, wobei das Schneidwerkzeug (6) ein zylindrisches, rohrförmiges Teil ist, das eine durchgehende Schneidkante (60) mit Kerben (61) umfasst, wobei die Kante mit Diamantpulver bedeckt ist, und die Wand des zylindrischen Teils eine Öffnung aufweist, die dazu bestimmt ist, das Abfließen einer Flüssigkeit zu erlauben.

11. Vorrichtung nach einem der Ansprüche 1 bis 10, wobei das abnehmbare Befestigungsmittel (11) der Welle ein Befestigungssystem durch Absteifen umfasst, das ein Blech (110) umfasst, das mit einer Durchgangsöffnung (111) für die Welle versehen ist, und ein Federmittel (112), das zur Schrägstellung der Öffnung konfiguriert ist, um eine Blockierung durch Reibungen zwischen den Rändern der Öffnung und der Welle sicherzustellen.

12. Bohrverfahren einer Kanalisation, die einen Abzweigbund umfasst, der mit einem Hahn versehen ist, umgesetzt von einer Bohrvorrichtung (1) nach einem der Ansprüche 1 bis 11, deren Anschlussteil fest mit dem Hahn (4) des Abzweigbundes (5) verbunden ist, wobei das Verfahren die folgenden Schritte umfasst:
- Anbringen der Welle (7) bis zum Anschlag (6) des Schneidwerkzeugs auf der Kanalisation (2), und Befestigen der Welle an dem zweiten Teil der Bohrvorrichtung über das abnehmbare Befestigungsmittel (11),
- Übergang des Betätigungsmechanismus (15) von der ersten Ruheposition (Pr) in der der dritte Teil (14) in einer von dem Anschlussteil (3) entfernten Position ist, zu der Arbeitsposition (Pt), in der der dritte Teil (14) in einer dem Anschlussteil (3) angenäherten Position ist, wobei er daher die Kompression der elastischen Mittel (12) sicherstellt, wobei der erste Teil in Verschiebung von der Welle (7) blockiert ist, die dabei an dem zweiten Teil (10) befestigt ist, das Schneidwerkzeug (6) im Anschlag gegen die Kanalisation (2) ist,
- Koppeln des distalen Endes der Welle (7) mit Motormitteln,
- Bohren durch Indrehungversetzen der Welle und des Schneidwerkzeugs derart, dass die Bohrkraft und der Vorschub des Schneidwerkzeugs (6) nur durch die elastischen Mittel (12) sichergestellt werden.

## Claims

1. A drilling device (1) suitable for drilling a pipe (2) under load, comprising a connection part (3) configured to be removably fixed to a tap (4) of a bypass collar (5), as well as a cutting tool (6) that can be displaced relative to said connection part (3), configured to pass through said tap (4) to allow drilling the pipe (2), said drilling device (1) comprising:
- a shaft (7) coupled at one of its ends to the cutting tool; the other end of the shaft being intended to be connected to motor means for rotating the cutting tool,
- a body (8) rigidly integral to the connection part (3),
- a first part (9), slidably movable relative to said body (8) along a limited travel, thanks to guide means between said first part and said body, directed in a direction parallel to the shaft,
- a second part (10), rotatably movable relative to said first part thanks to rotational guide means between said second part and said first part, of axis coincident with that of the shaft, said second part comprising a means (11) for removably fixing said shaft,
- elastic means (12) configured to constrain said first movable part relative to the body in the drilling direction,
- means (13) for loading said elastic means
said device being configured so as to allow a drilling during which the drilling force and the forward movement of the cutting tool are provided only by the elastic means, **characterised in that** the loading means (13) comprise:
- a third part (14), slidably movable relative to the body (8) and relative to the first part (9), said elastic means (12) being provided to be compressed between a bearing formed on the third part (14), and a bearing formed on the first part (9) so that said elastic means are configured to be compressed by displacement of the third part relative to the body, while the first part remains fixed relative to said body,
- an operating mechanism (15) between the body (8) and the third part (14) configured to ensure the displacement of the third part (14) on the body (8) in the direction of drilling said operating mechanism (15) being configured to assume two positions, including a rest position (Pr) wherein the third part (14) is in a position remote from the connection part (3), and a working position (Pt) wherein the third part (14) is in a position close to the connection part (3), said operating mechanism (15) being configured to ensure the compression of the elastic means (12) by switching from the rest position (Pr) to the working position (Pt) when the first part (9) is slidably blocked by said shaft (7) then fixed to the second part (10), the cutting tool (6) then abutting against the pipe (2).

2. The device according to claim 1, wherein the first part (9) comprises a tube (90), coaxial with the shaft and traversed by said shaft (7), and wherein the elastic means (12) comprise a spiral spring mounted around the tube (90), a projecting shoulder (91) forming a seat for one end of the spiral spring, the other end of the spiral spring being bearing on a seat (140) formed on the third part (14).

3. The device according to claim 1 or 2, wherein the operating mechanism (15) comprises a control lever (150, 150') pivotally articulated on the third part (14), as well as a cam (151) and cam follower (152) pair distributed between the body (8) and the lever (150; 150'), the cam follower (152) being integral with the body (8) and the cam (151) integral with the base of the control lever, said operating mechanism being configured to assume said rest position (Pr) corresponding to a first relative position of the cam (151) relative to the cam follower (152), and said working position (Pt), obtained by pivoting the control lever (150; 150'), and corresponding to a second relative position of the cam (151) relative to the cam follower (152), and wherein the cam (151) comprises a cam track formed on a base part of the control lever (150; 150'), the path being of variable radius relative to the axis of rotation (153) of the control lever of substantially decreasing radius for the cam follower (152) between the rest position (Pr) and the working position (Pt) in order to force the third part (14) from the position remote from the connection part (3) towards the position close to the connection part (3).

4. The device according to claim 3 wherein the cam track has two end-of-travel stops for said cam follower (152); with a first stop (154) for the cam follower in the rest position (Pr) of the operating mechanism and a second stop (155) for the cam follower in the working position (Pt) of the operating mechanism.

5. The device according to claim 4 wherein the cam track has a decreasing radius relative to the axis of rotation (153) for the cam follower (152), immediately before the second end of travel (155) then has a suddenly increasing radius when said cam follower arrives in said second end of travel (155), in order to constitute a stable position of the cam follower (152) in the cam track in said working position (Pt) of the operating mechanism (15).

6. The device according to claim 3, 4 or 5 wherein the cam (151) and the cam follower (152) of the operating mechanism (15) are housed in a casing (155) configured to prevent the risk of pinching between the cam (151) and the cam follower (152).

7. The device according to one of claims 3 to 6, wherein the cam follower (152) is a roller pivotally articulated on the body (8) along a pivot axis substantially perpendicular to the shaft (7).

8. The device according to any one of claims 3 to 7, wherein the operating mechanism (15) comprises two said operating levers (150; 150'), each being associated with a cam (151) and a cam follower (152) pair distributed between the body (8) and the control lever, said two cam (151) and cam follower (152) pairs being distributed on either side of the shaft (7).

9. The device according to any one of claims 1 to 8, wherein the third part (14) forms a casing partially receiving in its interior:
- the body (8) at least partially at the opposite end of the connection part (3),
- the first part (9),
and wherein the third part (14) includes an internal guide surface (141) configured to slide on an external surface (80) of the body (8).

10. The device according to one of claims 1 to 9, wherein the cutting tool (6) is a cylindrical, tubular part having a cutting edge (60), which is discontinuous, with notches (61), the edge present being covered with diamond powder, and the wall of the cylindrical part having an opening intended to allow the flow of a liquid.

11. The device according to one of claims 1 to 10, wherein the means (11) for removably fixing the shaft comprises a system for fixing by bracing comprising a sheet (110) provided with a passage opening (111) for the shaft, and a resilient means (112) configured to bias the opening in order to provide frictional blocking between the edges of the opening and said shaft.

12. A method for drilling a pipe comprising a bypass collar provided with a tap, implemented by a drilling device (1) according to any one of claims 1 to 11 the connection part of which is integral with the tap (4) of the bypass collar (5), said method comprising the following steps:
- positioning the shaft (7) until abutting the cutting tool (6) on the pipe (2) and fixing the shaft to the second part of the drilling device via the removable fixing means (11),
- switching the operating mechanism (15) from the first rest position (Pr) wherein the third part (14) is in a position remote from the connection part (3) to the working position (Pt) wherein the third part (14) is in a position close to the connection part (3) thus ensuring the compression of the elastic means (12), said first part being slidably blocked by said shaft (7) then fixed to the second part (10), the cutting tool (6) being abutted against the pipe (2),
- coupling the distal end of the shaft (7) to motor means,
- drilling by rotating the shaft and the cutting tool, so that the drilling force and the forward movement of the cutting tool (6) are provided only by said elastic means (12).
